Europäisches Patentamt

European Patent Office

Office européen des brevets

(11) Publication number: **0 520 098 A1**

# EUROPEAN PATENT APPLICATION

(21) Application number: **91305670.1**

(22) Date of filing: **24.06.91**

(51) Int. Cl.⁵: **G06F 15/72**

(43) Date of publication of application:
**30.12.92 Bulletin 92/53**

(84) Designated Contracting States:
**CH DE FR GB LI NL**

(71) Applicant: SHUKYOHOJIN, KONGO ZEN
SOHONZAN SHORINJI
1-48, Hondori 3-chome, Tadotsucho
Nakatado-gun, Kagawa-ken(JP)

(72) Inventor: **Kunii,Tosiyasu**
**25-21-602,Hongo-1-1chome**
**Bunkyo-ku Tokyo(JP)**
Inventor: **Sun,Lining**
**602,1-22-13 Miyamoto Funabashi**
**Chiba(JP)**

(74) Representative: **Stoner, Gerard Patrick et al**
**Mewburn Ellis 2 Cursitor Street**
**London EC4A 1BO(GB)**

(54) **Motion analyzing method.**

(57) A motion analyzing method using dynamics comprises forming a model of a moving body such as a human or animal body. The model has a plurality of segments connected by joints. Actual motions of a moving body are applied to the model. The forces and torques acting on each segment of the model as a result of the motions, and the positions of and forces acting on the centers of gravity of the segments and the entire model are calculated by dynamics. The results can be displayed on a screen superimposed on a picture of the model.

EP 0 520 098 A1

This invention relates to a method for analyzing the motions of a moving object such as a machine, an animal, or a human being using a computer.

In various endeavors, it is desirable to be able to analyze the motions of moving objects. For example, in order to teach an athlete a new movement for use in performing a sport, it is helpful to understand the nature of the movement, such the center of gravity of the body of the athlete or the acceleration of various parts of the body during the movement. In the past, a motion analyst observed the motions of a skilled athlete and then on the basis of his observations formed a curriculum for teaching the same motion to another person. However, because observations are subjective, they may not give accurate results.

There has recently been proposed a technique wherein the motions of a moving body such as an animal or human are analyzed using a computer which performs kinematic analysis. In kinematics, motions are described in terms of positions, velocities, and accelerations on the basis of data which depends on the subject of analysis. Unfortunately, kinematic analysis can only generate a line picture representing the parts constituting the moving body, and a three-dimensional model of the moving body cannot be displayed realistically. Accordingly, it is difficult to understand the display.

Furthermore, while computer analysis of motions preferably utilizes a method having real time response, conventional methods have no real time response because they require the ascertainment of the contents of actual motions and fine adjustment based on the results.

Another method referred to as dynamics provides the motions of an object based on the relation between movements and forces. If dynamics is applied to computer analysis of motions, it is possible to generate complex behavior with minimal control However, motion analysis utilizing dynamics requires data on parameters such as the moments of inertia, the centers of mass, joint friction, and muscle/ligament elasticity of the moving body, which are difficult to measure. Without such data, dynamic motion analysis provides unreasonable results similar to those produced by kinematic motion analysis. Furthermore, it is necessary to solve rather complex dynamic equations. For a human body with 200 degrees of freedom, it is necessary to solve 600 simultaneous equations.

Conventional computer analysis utilizing dynamics to analyze the motions of a human body involves the following steps.

(1) Constructing a model of the human body;
(2) Applying the actual motions of a human to the model;
(3) Analyzing the motions of the model; and
(4) Reproducing the analyzed motions.

In the fourth step (reproducing the analyzed motions), the dynamic equations may be solved exactly. However, this method is not suitable because of its conceptual and computational complexity, since when n is the number of segments constituting the human body model and forming the minimal units of motion in the motion analysis, the computational complexity $O(f(n))$ becomes a function $O(n^4)$ of $n^4$, and thus is very large, so calculation requires a long time.

A motion analyzing method which reduces the computational complexity to $O(n)$ by neglecting rotations of joints about the principal axes has been proposed. However, with this method, only a line picture of the parts constituting the human body can be displayed on a screen. In addition, when the rotations of joints about the principal axes cannot be neglected, this method is not applicable. Thus, by using this method, a three-dimensional model of a human body cannot be realistically displayed on a screen.

It would be desirable to provide a motion analyzing method which can analyze the motions of a moving body using a computer without requiring trial and error or the intuition of an analyst.

According to a motion analyzing method of the present invention, the basic motions of an moving body are analyzed to obtain data on dynamic parameters including the forces and torques exerted on joints of the body, and this data is put into a database as knowledge regarding the basic motions. Photographic films or video films of various motions of the moving body viewed from various directions are analyzed using the data in the database. The forces and torques exerted on the joints of the moving body in these motions are calculated using inverse dynamics and then displayed.

A motion analyzing method embodying the present invention will now be described for the case in which the motions of a human being are to be analyzed. The method includes the following steps.

(1) Constructing a model of the human body;
(2) Applying the actual motions of a human to the model;
(3) Analyzing the resulting motions of the model; and
(4) Displaying the result.

In the first step (constructing a model), the human body is divided into a plurality of segments connected by joints, each of the segments acting as a minimal unit of motion. A model is then constructed on the basis of constraints including the nature of each segment, the articulation of the body, and the range of movement of the joints connecting the segments. Data defining the model is stored in a computer as a database.

In the second step (applying actual motions), a film is taken of the actual motions of a human, and for each frame of the film, the positions of the body parts of the human are quantified and input to the computer. This data is applied to the model, and the computer calculates the position, velocity, and acceleration of each segment of the model. When the human is simultaneously filmed from a plurality of directions, the analysis in the next step can be executed more concretely.

In the third step (analyzing the motions of the model), the motions of the segments determined in the second step are analyzed using inverse dynamics to determine the center of gravity of each body segment, the force and torque exerted on each joint, the position of the center of gravity of the whole body, and the force and torque exerted on the center of gravity of the whole body.

In the fourth step (displaying the result), the center of gravity of each body segment, the force and torque exerted on each joint, the center of gravity of the whole body, and the force and torque exerted on the center of gravity of the whole body, which are obtained in the third step, are displayed on a screen by arrows or other symbols superimposed on a display of the model.

As mentioned above, motion analysis utilizing dynamics comprises three steps: application of dynamics, application of constraints, and application of inverse dynamics. In the step of applying dynamics, the human body is divided into a plurality of independent body segments connected by joints, and the motion of each body segment is calculated independently of the other segments using Newton's equation of motion and Euler's equations. In the step of applying constraints, the articulation of the body and the range of movement of the joints are checked.

Accordingly, the motion analyzing method according to the present invention can eliminate the computational complexity of conventional methods utilizing dynamics, it permits feedback in real time using dynamics, and it permits dynamics to be applied to actual motion analysis.

Furthermore, in order to calculate the motions of each segment of the human body, since the linear acceleration of the center of gravity is calculated using Newton's equation of motion and the angular acceleration of the center of gravity is calculated using Euler's equations, it is possible to determine and display not only the position of and the force exerted on the center of gravity of each body segment, but also the position of and the force exerted on the center of gravity of the whole body.

In conventional motion analyzing methods, basic data on the motions of the human body and the constraints that define the range of movements of individual joints is obtained using the intuition of the analyst. In contrast, in the method according to the present invention, actual dynamic parameters are obtained by analyzing the actual motions of the human body. Accordingly, the motions derived from these parameters are reliable and provide realistic motions.

Although the present invention has been described with respect to analysis of motions of a human being, the same method can be used for the analysis of the motions of any moving object, such as an animal or a machine.

In the prior art, US patents 4807108, 4744026, 4744027 and 4744028 all describe approaches to motion analysis and management. Reference to these may be helpful.

## Claims

1. A motion analyzing method comprising:

dividing a moving body into a plurality of segments connected by joints, each of the segments acting as a minimal unit of motion, constructing a model of the moving body on the basis of constraints including the inherent future of each segment, the articulation of the body, and the range of movement of each joint, and inputting the model into a database;

applying the actual motions of a moving body to the model;

calculating the resulting motions of the model using inverse dynamics and calculating the center of gravity of each segment, the force and torque exerted on each joint, the center of gravity of the whole body, and the force and torque exerted on the center of gravity of the whole body; and

displaying the calculated results.

2. A method as claimed in claim 1, comprising displaying the forces and center of gravity calculated by inverse dynamics and the applied motions on a screen by composing them.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | IEEE COMPUTER GRAPHICS AND APPLICATIONS. vol. 7, no. 6, June 1987, NEW YORK US pages 12 - 27; WILHELMS: 'using dynamic analysis for realistic animation of articulated bodies' * the whole document * | 1-2 | G06F15/72 |
| A | IEEE COMPUTER GRAPHICS AND APPLICATIONS. vol. 7, no. 4, April 1987, NEW YORK US pages 11 - 22; WILHELMS: 'toward automatic motion control' * page 14, column 2, line 31 - page 18, column 2, line 28 * | 1-2 | |
| A | INTERNATIONAL JOURNAL OF ROBOTICS RESEARCH vol. 8, no. 1, February 1989, CAMBRIDGE MA US pages 63 - 76; HASHIMOTO ET AL: 'a new parallel algorithm for inverse dynamics' * page 64, column 2, line 1 - line 15 * | 1-2 | |

TECHNICAL FIELDS SEARCHED (Int. Cl.5 )

G06F

The present search report has been drawn up for all claims

| Place of search | Date of completion of the search | Examiner |
|---|---|---|
| THE HAGUE | 20 FEBRUARY 1992 | GUINGALE A. |